# EUROPEAN PATENT SPECIFICATION

(11) **EP 1 274 202 B1**
(45) Date of publication and mention of the grant of the patent: **26.10.2005**
(21) Application number: 02011772.7
(22) Date of filing: 27.05.2002
(51) Int. Cl.: H04L 12/56

(54) **Local suspend function and reset procedure in a wireless communications system**
Verfahren zur lokalen Unterbrechung und Rücksetzung in einem drahtlosen Kommunikationsystem
Méthode pour suspendre et réinitialiser localement une communication sans fils

(30) Priority: 05.07.2001 US 681992
(43) Date of publication of application: 08.01.2003
(73) Proprietor: ASUSTeK Computer Inc., Peitou, Taipei City (TW)
(72) Inventor: Jiang, Sam Shiaw-Shiang, Peitou, Taipei City (TW); Kuo, Richard Lee-Chee, Peitou, Taipei City (TW)
(74) Representative: TER MEER - STEINMEISTER & PARTNER GbR

(56) References cited:
- EP-A- 0 395 563
- WO-A-01/78437
- US-A- 5 926 468
- "Universal Mobile Telecommunications system (UMTS); RLC protocol specification (3GPP TS 25.322 version 4.0.0 Release 4)" ETSI TS 125 322 V4.0.0, [Online] March 2001 (2001-03), XP002238465 Retrieved from the Internet: <URL:www.etsi.org> [retrieved on 2003-04-15]

## Description

### BACKGROUND OF THE INVENTION

### 1. Field of the Invention

The present invention relates to a state model for a wireless communications device. In particular, the present invention discloses a method for handling interleaved suspend and reset functions in a wireless communications system.

### 2. Description of the Prior Art

Technological advances have moved hand in hand with more demanding consumer expectations. Devices that but ten years ago were considered cutting edge are today obsolete. These consumer demands in the marketplace spur companies towards innovation. The technological advances that result only serve to further raise consumer expectations. Presently, portable wireless devices, such as cellular telephones, personal data assistants (PDAs), notebook computers, etc., are a high-growth market. However, the communications protocols used by these wireless devices are quite old. Consumers are demanding faster wireless access with greater throughput and flexibility. This has placed pressure upon industry to develop increasingly sophisticated communications standards. The 3^{rd} Generation Partnership Project (3GPP™) is an example of such a new communications protocol.

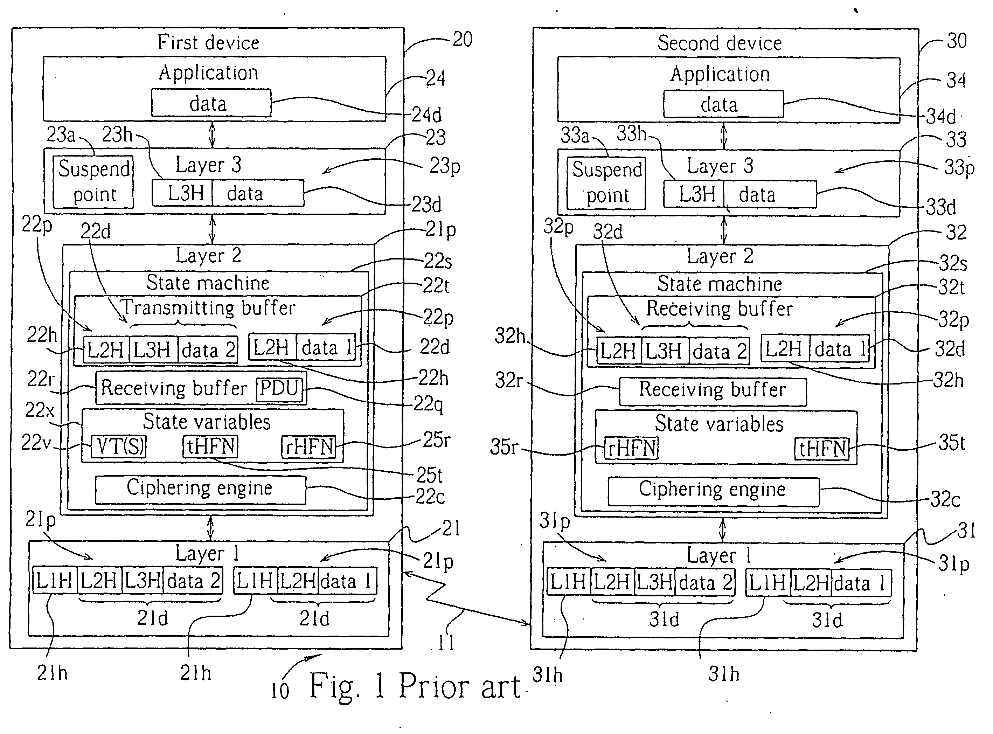

The 3GPP™ standard (TS 25.322 Version 4.0.0 Relase 4) utilizes a three-layered approach to communications. Please refer to Fig.1. Fig.1 is a simplified block diagram of the prior art communications model. A prior art wireless system includes a first device 20 and a second device 30, both of which are in wireless communications with each other. As an example, the first device 20 may be a mobile unit, such as a cellular telephone, and the second device 30 may be a base station. An application 24 on the first device 20 needs to send data 24d to an application 34 on the second device 30. The application 24 connects with a layer 3 interface 23 (termed the radio resource control (RRC)), and passes the data 24d to the layer 3 interface 23. The layer 3 interface 23 uses the data 24d to form a layer 3 protocol data unit (PDU) 23p. The layer 3 PDU 23p includes a layer 3 header 23h and data 23d, which is identical to the data 24d. The layer 3 header 23h in the layer 3 PDU 23p contains information needed by the corresponding layer 3 interface 33 on the second device 30 to effect proper communications. The layer 3 interface 23 then passes the layer 3 PDU 23p to a layer 2 interface 22. The layer 2 interface 22 (also termed the radio link control (RLC)) uses the layer 3 PDU 23p to build one or more layer 2 PDUs 22p, which are then placed in a transmitting buffer 22t. Generally speaking, each layer 2 PDU 22p has the same fixed size. Consequently, if the layer 3 PDU 23p is quite large, the layer 3 PDU 23p will be broken into chunks by the layer 2 interface 22 to form the layer 2 PDUs 22p, as is shown in Fig.1. Each layer 2 PDU 22p contains a data region 22d, and a layer 2 header 22h. In Fig.1, the data 23d has been broken into two layer 2 PDUs 22p. Also note that the layer 3 header 23h is placed in the data region 22d of a layer 2 PDU 22p. The layer 3 header 23h holds no significance for the layer 2 interface 22, and is simply treated as data. The data regions 22d, and a portion of the headers 22h, of the layer 2 PDUs 22p are encrypted by way of a ciphering engine 22c. The layer 2 interface 22 then passes the encrypted layer 2 PDUs 22p in the transmitting buffer 22t to a layer 1 interface 21. The layer 1 interface 21 is the physical interface, and does all the actual transmitting and receiving of data. The layer 1 interface 21 accepts the layer 2 PDUs 22p and uses them to build layer 1 PDUs 21p. As with the preceding layers, each layer 1 PDU 21p has a data region 21d and a layer 1 header 21h. Note that the layer 3 header 23h and layer 2 headers 22h are no more important to the layer 1 interface 21 than the application data 24d. The layer 1 interface 21 then transmits the layer 1 PDUs 21p to the second device 30.

A reverse process occurs on the second device 30. After receiving layer 1 PDUs 31p from the first device 20, a layer 1 interface 31 on the second device 30 removes the layer 1 headers 31h from each received layer 1 PDU 31p. This leaves only the layer 1 data regions 31d, which are, ineffect, encrypted layer 2 PDUs. These layer 1 data regions 31d are passed up to a layer 2 interface 32, which decrypts them by way of a ciphering engine 32c (equivalent to, and synchronized with, the ciphering engine 22c) to generate layer 2 PDUs 32p that are placed into a receiving buffer 32r. The layer 2 interface 32 uses the layer 2 headers 32h to determine how to assemble the decrypted layer 2 PDUs 32p in the receiving buffer 32r into appropriate layer 3 PDUs. In the example shown in Fig.1, the layer 2 headers 32h are stripped from the layer 2 PDUs 32p, leaving only the data regions 32d. The data regions 32d are appended to each other in the proper order, and then passed up to the layer 3 interface 33. The layer 3 interface 33 accepts the layer 3 PDU 33p from the layer 2 interface 32, strips the header 33h from the layer 3 PDU 33p, and passes the data region 33d to the application 34. The application 34 thus has data 34d that should be identical to the data 24d sent by the application 24 on the first device 20.

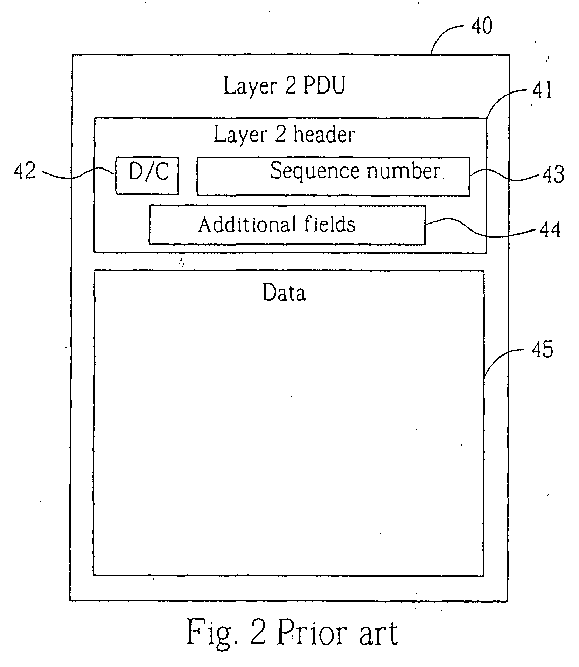

Please refer to Fig.2 in conjunction with Fig.1. Fig.2 is simplified block diagram of a layer 2 PDU 40. The layer 2 PDU 40 has a layer 2 header 41 and a data region 45. As noted above, the data region 45 is used to carry layer 3 PDUs 23p received from the layer 3 interface 23. The layer 2 header 41 includes a data/control indicator bit 42, a sequence number (SN) field 43, and additional fields 44. The additional fields 44 are not of direct relevance to the present invention, and so will not be discussed. The data/control bit 42 is used to indicate if the layer 2 PDU 40 is a data PDU or a control PDU. Data PDUs are used to carry layer 3 data. Control PDUs are generated internally by the layer 2 interface 22, 32 and are used exclusively for signaling between the layer 2 interfaces 22 and 32, such as the passing of reset and reset acknowledgment signals. Control PDUs are thus never passed up to the layer 3 interface 23, 33. The sequence number field 43 contains a 12-bit or 7-bit value that is used to reassemble the layer 2 PDUs 40 into layer 3 PDUs 33p, and which is also used for the enciphering and deciphering of the layer 2 PDU 40. For purposes of the present invention, 12-bit sequence numbers 43 are considered, which thus have a maximum possible value of 4095. Each layer 2 PDU 22p is transmitted with a successively higher value in the sequence number field 43, and in this manner the layer 2 interface 32 knows the correct ordering of received layer 2 PDUs 32p. It is possible for sequence numbers 43 of successive layer 2 PDUs 40 to rollover, i.e., successively transmitted layer 2 PDUs 22p may have sequence numbers 43 that go like 4093, 4094, 4095, 0, 1, 2, etc. In the layer 2 PDU 40, the data/control indicator bit 42 and the sequence number 43 are not enciphered. Everything else, i.e. the additional fields 44 and the data field 45, is enciphered. The sequence number 43 is not enciphered as it is required by the ciphering engine 32c on the receiving station 30 to decipher the received layer 2 PDU 32p.

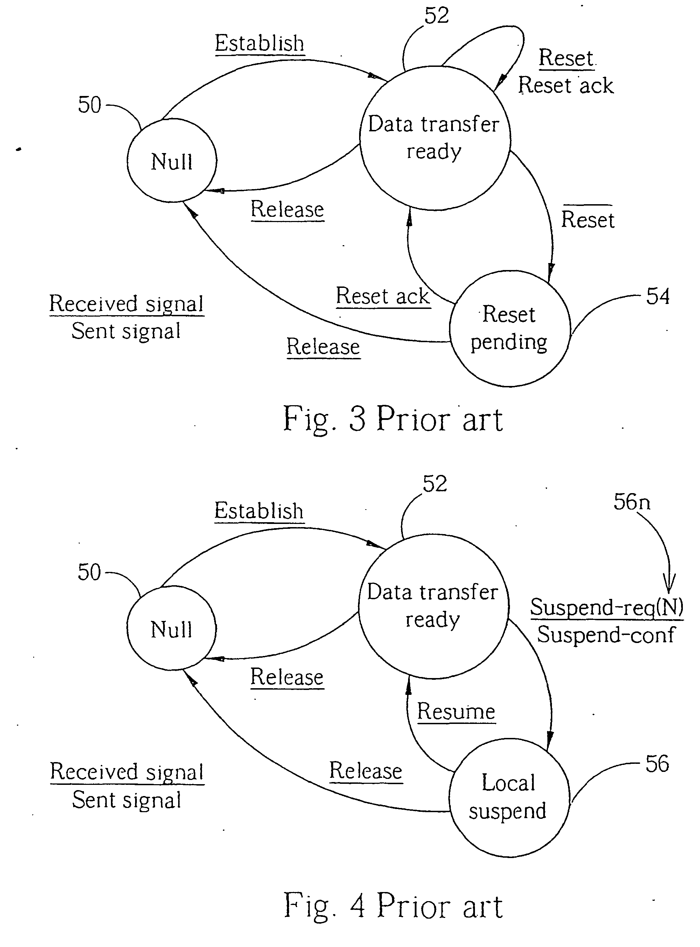

Please refer to Figs.3 and 4 in conjunction with Figs.1 and 2. Figs.3 and 4 are state model diagrams of a prior art layer 2 interface. The prior art layer 2 interface 22, 32 is designed as a finite state machine 22s, 32s. Fig.3 depicts the state model for the layer 2 state machine 22s, 32s when a reset command is performed. Fig.4 depicts the state model when a local suspend command is performed. Transitions between states are noted by arrows in Figs.3 and 4. Received signals associated with a state transition are noted above a horizontal line, and signals sent in response to the state transition are noted below the horizontal line. The layer 2 state machine 22s, 32s includes a null state 50, a data transfer ready state 52, a reset pending state 54 and a local suspend state 56. The first device 20 is capable of communicating with the second device 30 over a plurality of channels 11. Each channel 11 has a corresponding state machine 22s, 32s on the first station 20 and second station 30, respectively. To explain these state models, the first device 20 will be used as an example, and only a single channel 11 is considered. When the layer 2 state machine 22s is in the null state 50, the state machine 22s has no established wireless channel 11 with the second device 30. The state machine 22s of the first device 20 thus cannot transmit any layer 2 PDUs 22p to the second device 30. When the application 24 determines that it wishes to send the data 24d to the application 34, the application 24 signals this intent to the layer 3 interface 23. The layer 3 interface 23 then performs whatever functions are necessary to establish the channel 11 with the second device 30. In particular, the layer 3 interface 23 sends an establish primitive to the state machine 22s. On reception of the establish primitive, the state machine 22s transitions from the null state 50 to the data transfer ready state 52. In the process of doing so, the state machine 22s establishes the corresponding wireless channel 11 with the second device 30, and sets up the initial conditions of the state machine 22s for the channel 11. Amongst other things, this will involve clearing the transmitting and receiving buffers 22t and 22r, and setting initial values for state variables 22x. Three state variables 22x of particular relevance to the present invention are VT (S) 22v, a transmitting hyper-frame number (tHFN) 25t, and a receiving hyper-frame number (rHFN) 25r. VT(S) 22v holds the value of the sequence number 43 of a layer 2 PDU 22p in the transmitting buffer 22t that is next in line to be transmitted. This generally implies, then, that a layer 2 PDU 22p having a sequence number 43 with a value of VT(S)-1 has already been transmitted by the layer 2 interface 22 along the channel 11. Initially, VT(S) 22v is set to zero, so that the first layer 2 PDU 22p sent along the channel 11 has a sequence number 43 of zero. The tHFN 25t holds a value that is incremented every time the state machine 22s detects rollover of the sequence numbers 43 of transmitted layer 2 PDUs 22p. In effect, the tHFN 25t acts like high-order bits for the sequence numbers 43 of each transmitted layer 2 PDU 22p. Analogously, the rHFN 25r holds a value that is incremented every time the state machine 22s detects rollover of the sequence numbers 43 of received layer 2 PDUs 22q from the second device 30. It is extremely important that the tHFN 25t remain synchronized with a corresponding rHFN 35r of the state machine 32s on the second station 30. This is because the tHFN 25t, in conjunction with the sequence number 43, is used to encipher each transmitted layer 2 PDU 22p. When enciphering each layer 2 PDU 22p, the ciphering engine 22c uses an HFN/SN pair of the layer 2 PDU 22p (SN indicating the sequence number 43 of the transmitted layer 2 PDU 22p, and HFN indicating the tHFN 25t associated with the transmitted layer 2 PDU 22p) to perform the encryption. The second device 30 increments its corresponding rHFN 35r upon detection of rollover of the sequence number 43 of each received layer 2 PDU 32p along the channel 11. The ciphering engine 32c uses an HFN/SN pair for each received layer 2 PDU 32p (SN indicating the sequence number 43 of the received layer 2 PDU 32p, and HFN indicating the rHFN 35r associated with the received layer 2 PDU 32p) to decipher the layer 2 PDU 32p. It should be clear, then, that it is important that the HFN/SN pairs used for a transmitted layer 2 PDU 22p be identical to an HFN/SN pair used for the corresponding received layer 2 PDU 32p to effect a proper encryption/decryption process. Maintaining proper synchronization of the SN portion of an HFN/SN pair is not difficult, as it is physically transmitted as the sequence number 43 with the layer 2 PDU 22p. However, the corresponding tHFN 25t of a layer 2 PDU 22p is not transmitted, and thus great care must be taken to ensure that corresponding HFN state variables 25t/35r and 25r/35t remain synchronized. When the channel 11 is established, the state machines 22s and 32s negotiate between themselves to determine an initial value for the HFNs 25t, 25r, 35t and 35r. While in the data transfer ready state 52, the first device 20 can freely transmit layer 2 PDUs 22p along the channel 11. At any time when the state machine 22s is in the data transfer ready state 52 and receives a release primitive from the layer 3 interface 23, the state machine 22s will transition back to the null state 50. In the process of doing so, the layer 2 interface 22 will close down the corresponding channel 11.

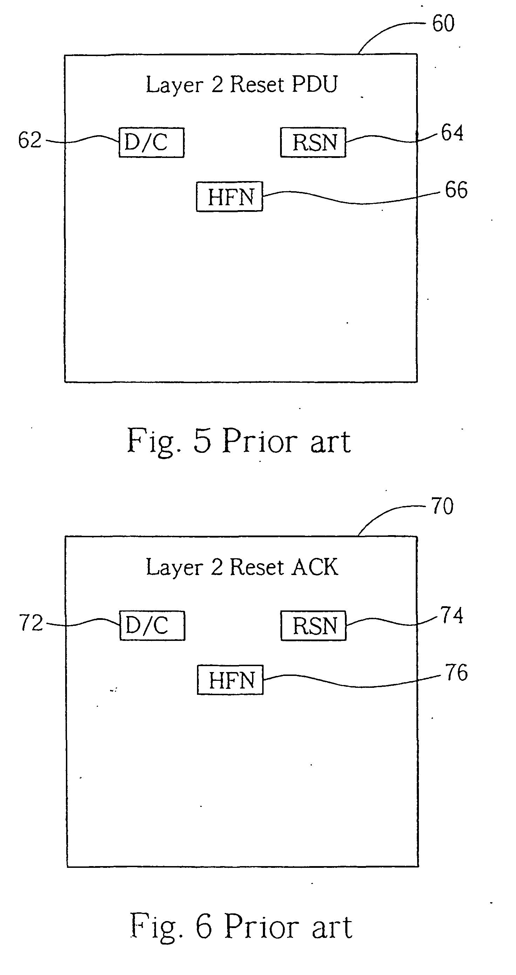

From time to time, the layer 2 interface 22 may determine that communications along the channel 11 are malfunctioning. This may occur, for example, when the enciphering/deciphering process gets out of synchronization. In this case, the layer 2 interface 22 will desire to reset the communications system along the channel 11. To ensure that the channel 11 is properly reset, both the state machine 22s and the state machine 32s must be reset. Please refer to Fig.5 in conjunction with Figs.1 to 4. Fig.5 is a simplified block diagram of a layer 2 reset control PDU 60. To reset the state machine 32s, the layer 2 interface 22 generates the reset control PDU 60, and sends the reset control PDU 60 along the channel 11 to the layer 2 interface 32 on the second device 30. The reset control PDU 60 includes a data/control bit 62 that is set to indicate that the reset control PDU 60 is a control PDU, a reset sequence number (RSN) 64 that is incremented with each new reset control PDU 60, and an HFN field 66, that is used to hold the current value of the tHFN 25t. After transmitting the layer 2 reset control PDU 60, the state machine 22s on the first device 20 then transitions from the data transfer ready state 52 to the reset pending state 54. While in the reset pending state 54, the state machine 22s will transmit no layer 2 PDUs 22p to the second device 30 along the channel 11. This effectively halts communications along the channel 11. Please refer to Fig.6 in conjunction with Figs.1 to 5. Fig.6 is a simplified block diagram of a layer 2 reset acknowledgment PDU 70. The state machine 22s remains in the reset pending state 54 until reception of the reset acknowledgment control PDU 70 along the channel 11 from the layer 2 interface 32 of the second device 30. This reset acknowledgment control PDU 70 informs the layer 2 interface 22 that the layer 2 interface 32 received the reset control PDU 60 and internally reset the state machine 32s. The layer 2 reset acknowledgment control PDU 70 includes a data/control bit 72 to signal that it is a layer 2 control PDU, an RSN field 74, which should be identical to the RSN field 64, to indicate which reset is being acknowledged, and an HFN field 76 that holds the current value of the tHFN 35t. When the state machine 22s receives the reset acknowledgment control PDU 70, the state machine 22s transitions from the reset pending state 54 to the data transfer ready state 52, and in the process of doing so resets the state machine 22s. This includes flushing the transmission and reception buffers 22t and 22r, and setting the state variables 22x to initial values. In particular, VT(S) 22v is set to zero, the rHFN 25r is set to one more than the value of HFN 76, and the tHFN 25t is incremented by one. In this manner, synchronization is reestablished between the state machines 22s and 32s, which should result in resumed normal communications along the channel 11. If at any time while the state machine 22s is in the reset pending state 54 and the state machine 22s receives a release primitive from the layer 3 interface 23, the state machine 22s will transition to the null state 50. In the process of doing so, the state machine 22s will close down the channel 11. Also note that the layer 2 interface 22 may receive a reset control PDU 60 from the layer 2 interface 32 of the second station 30 along the channel 11 while in the data transfer ready state 52. Upon reception of such a layer 2 reset control PDU 60, the state machine 22s transmits a reset acknowledgment control PDU 70 along the channel 11 to the layer 2 interface 32, and then internally resets itself (which includes flushing the transmitting and receiving buffers 22t and 22r, zeroing VT(S) 22v, incrementing the tHFN 25t by one, and setting the rHFN 25r to one greater than the value of HFN 66). The state machine 22s remains, however, in the data transfer ready state 52 during this process.

The local suspend state 56 is used to temporarily halt the transfer of layer 2 PDUs 22p along the channel 11, and is initiated by a suspend-request primitive from the layer 3 interface 23. The primary purpose of the local suspend state 56 is to ensure a proper ciphering configuration change between the first device 20 and the second device 30 along the channel 11, and, contrary to what its name might indicate, is designed to ensure that communications along the channel 11 occur in a smoothly uninterrupted manner while a ciphering configuration change is made. The layer 3 interfaces 23 and 33 are responsible for periodically changing the ciphering configuration of the channel 11 to ensure that communications along the channel 11 remain secure. Exactly how this is done is not-of direct relevance to the present invention, and so will not be gone into with any detail. Briefly, though, at any time while in the data transfer ready state 52, the state machine 22s may transition to the local suspend state 56 upon reception of the suspend-request primitive from the layer 3 interface 23. The suspend-request primitive contains a parameter N 56n, which indicates a suspend point 23a. In particular, the suspend point 23a is obtained by simply adding the value of N 56n with the current value of VT(S) 22v. This procedure does not take into account the tHFN 25t. When transitioning to the local suspend state 56 from the data transfer ready state 52, the state machine 22s responds with a suspend confirmation message to the layer 3 interface 23. The suspend confirmation message contains the current value of the state variable VT(S) 22v. While in the local suspend state 56, the state machine 22s may transmit along the corresponding channel 11 any layer 2 PDU 22p with a sequence number value 43 that is sequentially before the suspend point 23a, i.e., that is sequentially before VT(S) 22v plus N 56n. Any layer 2 PDU 22p having a sequence number value 43 that is sequentially after the suspend point 23a will not be transmitted by the layer 2 interface 22p along the channel 11. The purpose of the suspend point 23a is to give the finite state machine 22s N 56n layer 2 PDUs 22p worth of transmission space (and hence time) to synchronize to a new ciphering configuration with the state machine 32s. Ideally, within the N 56n layer 2 PDUs 22p, the first device 20 will have completed ciphering reconfiguration and synchronization with the second device 30 for the channel 11, upon which the second device 30 will have obtained a corresponding suspend point 33a. The first device 20 transmits layer 2 PDUs 22p enciphered using the old ciphering configuration for sequence numbers 43 that are prior to the suspend point 23a. Similarly, the second device 30 deciphers layer 2 PDUs 32p using the old ciphering configuration if the layer 2 PDUs 32p have sequence numbers 43 that are before the suspend point 33a. For layer 2 PDUs 22p, 32p with sequence numbers 43 after the suspend points 23a, 33a, the new ciphering configuration is used. In this manner, with communications ensured to be suspended if the PDUs 22p prematurely run into the new ciphering configuration domain, ciphering synchronization is maintained between the first and second devices 20 and 30 with the local suspend state 56. Upon reception of a resume primitive from the layer 3 interface 23, the state machine 22s transitions from the local suspend state 56 back to the data transfer ready state 52. The layer 3 interface 23 issues the resume primitive once the ciphering reconfiguration process between the two devices 20 and 30 is completed.

The prior art state model of Figs.3 and 4 does not account very well for transitions between the local suspend state 56 and the reset pending state 54, although such transitions are assumed possible. In particular, it is not difficult to imagine a situation arising in which, while the state machine 22s is in the local suspend state 56, the layer 2 interface 22 detects a communications error along the channel 11 and desires to initiate a reset procedure. As a particular example, consider the situation in which the layer 3 interface 23 issues a suspend primitive to the state machine 22s for the channel 11, with a value of 196 for N 56n. Further assume that, at the time that the suspend primitive is issued, VT(S) 22v holds a value of 3000. The suspend point 23a would thus be 196+3000=3196. Perhaps, after transmitting a layer 2 PDU 22p with a sequence number 43 of 3100, the layer 2 interface 22 determines that the channel 11 needs to be reset. After the reset procedure is completed (i.e., the sending of a reset control PDU 60 and the receiving of a corresponding reset acknowledgment control PDU 70), the state variable VT(S) 22v is set to a default value of zero. The state machine 22s remains in the local suspend state 56, as no resume primitive has been received from the layer 3 interface 23, and the suspend point 23a, unaffected by the reset procedure, remains 3196. The state machine 22s may thus transmit another 3196 "new" layer 2 PDUs 22p (with sequence numbers 43 from zero to 3195) before the new ciphering configuration is applied. This results in an unwanted and an unnecessary delay of the new ciphering configuration, since, if no reset procedure had been performed, only 196 new layer 2 PDUs 22p would have been permitted to be transmitted using the old ciphering configuration. The resetting of the channel 11 leads to an extra 3000 layer 2 PDUs 22p being transmitted using the old ciphering configuration.

### SUMMARY OF THE INVENTION

It is therefore a primary objective of this invention to provide an interleaving method for local suspend and reset functionality in a wireless communications system so as to avoid unnecessary delays in the activation of a new ciphering configuration along a channel.

Briefly summarized, the preferred embodiment of the present invention discloses an interleaved local suspend and reset method for a wireless communications system. The wireless communications system includes a first station in wireless communications with a second station along at least one channel. The first station initiates a local suspend function for the channel, with a suspend point determined by a first sequence number (SN) . Prior to a resume command to terminate the local suspend function, a reset procedure for the channel is performed. In response to the reset procedure, the first SN of the suspend point is set equal to a default value. The resume command for the channel then terminates the local suspend function. Alternatively, the suspend point is determined by a first hyper-frame number/sequence number (HFN/SN) pair. After the reset procedure, and prior to terminating the local suspend function, the first station transmits along the channel to the second station no layer 2 protocol data units (PDUs) having associated HFN/SN pairs that are sequentially after the first HFN/SN pair.

It is an advantage of the present invention that by resetting the suspend point in response to a reset procedure, or by using a hyper-frame number (HFN) to determine the suspend point, unwanted delays in effecting a ciphering configuration change along the channel are avoided. This leads to more secure communications along the channel.

These and other objectives of the present invention will no doubt become obvious to those of ordinary skill in the art after reading the following detailed description of the preferred embodiment, which is illustrated in the various figures and drawings.

### BRIEF DESCRIPTION OF THE DRAWINGS

Fig.1 is a simplified block diagram of a prior art communications model.
Fig.2 is simplified block diagram of a layer 2 protocol data unit (PDU).
Fig.3 depicts a state model for a prior art layer 2 interface when a reset command is performed.
Fig.4 depicts a state model for a prior art layer 2 interface when a local suspend command is performed.
Fig.5 is a simplified block diagram of a layer 2 reset control PDU.
Fig.6 is a simplifiedblockdiagramof a layer 2 reset control acknowledgment PDU.
Fig.7 is a simplified block diagram of a wireless communications device according to the method of the present invention.
Fig.8 is a state model for the communications device of Fig.7.
Fig.9 illustrates a timeline of the present invention method.

### DETAILED DESCRIPTION OF THE PREFERRED EMBODIMENT

In the following description, a wireless communications device may be a mobile telephone, a handheld transceiver, a base station, a personal data assistant (PDA), a computer, or any other device that requires a wireless exchange of data. It should be understood that many means may be used for the physical layer 1 to effect wireless transmissions, and that any such means may be used for the system hereinafter disclosed.

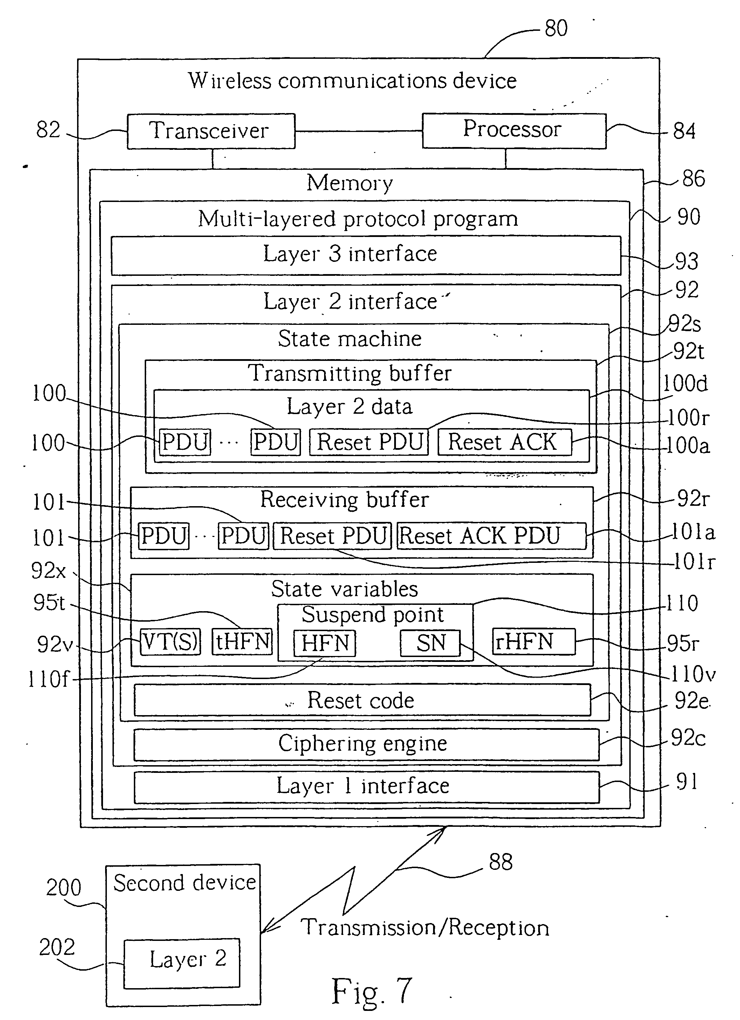

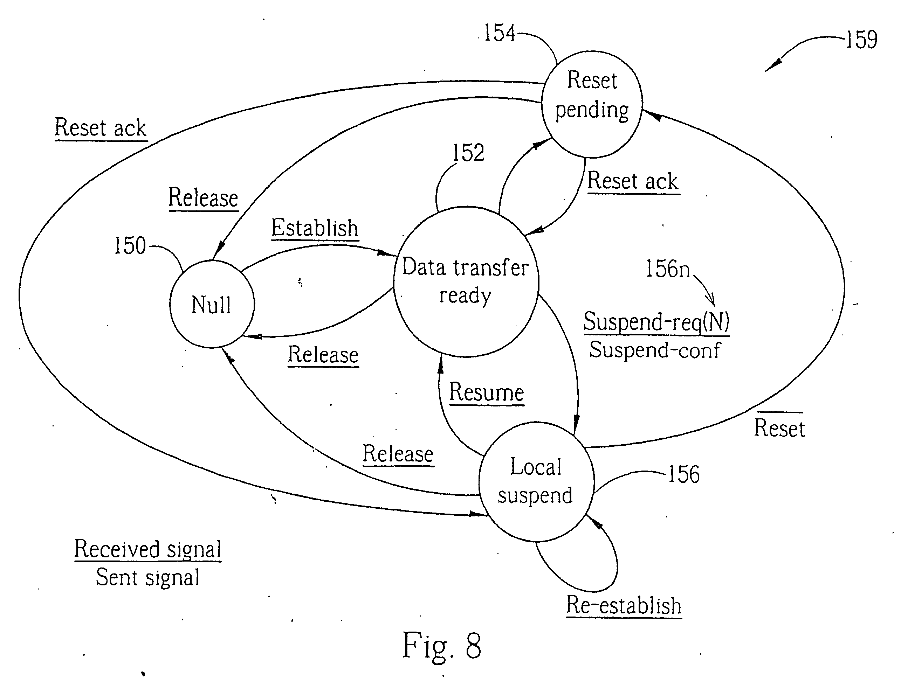

Please refer to Fig.7 and Fig.8. Fig.7 is a simplified block diagram of a wireless communications device 80 according to the method of the present invention. Fig.8 is a state model 159 for the communications device 80 of Fig.7. The wireless communications device 80 is capable of effecting multi-layered communications along one or more established channels 88 with a suitable second wireless device 200. The wireless communications device 80 comprises a processor 84 electrically connected to a transceiver 82 and a memory 86. The transceiver 82 is used to send and receive wireless signals, the operations of which are controlled by the processor 84. To control the transceiver 82, the processor 84 executes in the memory 86 a multi-layered protocol program 90. The multi-layered protocol program 90 is software that is used to effect a three-tiered communications protocol, which includes a layer 3 interface 93, a layer 2 interface 92 and a layer 1 interface 91. Although not shown in Fig.7, in some embodiments, the layer 1 interface 91, or portions thereof , may be embedded within the transceiver 82.

For each channel 88, the layer 2 interface 92 has a corresponding state machine 92s that is used to control the channel 88. For simplicity, only one channel 88 is considered, with one corresponding state machine 92s, though a plurality of such channels 88 (and consequent state machines 92s) are possible. The state machine 92s implements the state model 159. The state model 159 includes a null state 150, a data transfer ready state 152, a reset pending state 154, and a local suspend state 156. The state model is somewhat incomplete for the sake of brevity, showing only those transitions that are of direct relevance to the present invention. The state model 159 is much as was described in the Description of the Prior Art, and so only differences will be discussed in detail. In particular, the present invention considers transitions of the state machine 92s from the local suspend state 156 to the reset pending state 154, and thence back into the local suspend state 156. In general, however, the present invention is applicable to any situation in which a reset procedure occurs for the channel 88 (and hence the state machine 92s) while the state machine 92s is in the local suspend state 156. Such a reset procedure need not require that the state machine 92s transition into the reset pending state 154. An example of this includes an unrecoverable error detected along the channel 88 that causes the layer 3 interface 93 to issue a re-establish primitive to the state machine 92s to reset the channel 88.

Briefly, while in the null state 150, the state machine 92s has no established channel 88 with a layer 2 interface 202 of the second device 200. After receiving an establish primitive from the layer 3 interface 93, the state machine 92s establishes the channel 88, executes reset code 92e to place the channel 88 into a default state, and transitions into the data transfer ready state 152. The reset code 92e performs whatever reset procedure is required to place the state machine 92s, and hence the channel 88, into a default condition. While in the data transfer ready state 152, the state machine 92s may transmit layer 2 protocol data units (PDUs) 100, which are awaiting transmission in a transmitting buffer 92t, along the channel 88 to the layer 2 interface 202. The internal format of the PDUs 100 is as discussed in the prior art, and so references to Fig.2 will be made in the following. The reset code 92e, in the transition from the null state 150 to the data transfer ready state 152, sets up and clears both the transmitting buffer 92t and a receiving buffer 92r in which layer 2 PDUs land from the layer 1 interface 91, and also sets initial values for state variables 92x. In particular, the reset procedure of the reset code 92e sets state variables VT(S) 92v to a default value of zero, and negotiates with the second device 200 for an initial value of a transmitting hyper-frame number (tHFN) 95t and a receiving hyper-frame number (rHFN) 95r. As discussed previously, VT(S) 92v holds the value of the sequence number (SN) 43 of the next PDU 100 to be transmitted for the first time (i.e., a "new" PDU 100), and the tHFN 95t serves as high-order bits of the SN 43 that are not actually transmitted with the PDU 100. Note that each PDU 100 thus has an implicitly associated tHFN 95t, which need not be identical to the tHFNs 95t of the other PDUs 100. It is noted in particular that VT(S) 92v has an associated tHFN 95t. If, as discussed above, the SN 43 is 12 bits in length, then the tHFN 95t is 20 bits in length, to generate a 32-bit HFN/SN pair for each transmitted PDU 100.

A ciphering engine 92c is used to encrypt each PDU 100 in the transmitting buffer 92t according to the HFN/SN pair associated with the transmitted PDU 100, and to decrypt each PDU 101 in the receiving buffer 92r according to the HFN/SN pair of the received PDU 101. As discussed in previously in the Description of the Prior Art, the wireless device 80 must maintain two sets of HFN values: the tHFNs 95t for transmitted PDUs 100, and the rHFNs 95r for received PDUs 101. HFN/SN pairs for received layer 2 PDUs 101 use the rHFN 95r, and HFN/SN pairs for transmitted layer 2 PDUs 100 use the tHFN 95t. Diagrammatically, this can become overwhelming to draw, and so only a single tHFN 95t and a single rHFN 95r are indicated in Fig.7. For purposes of the present discussion, the tHFN 95t is primarily associated with VT(S) 92v, andshouldbeassumed as such unless otherwise noted or inferred from context.

The layer 3 interface 93 may initiate a local suspend function for the channel 88 in order to perform a ciphering configuration change. The layer 3 interface 93 issues a suspend request primitive to the state machine 92s while the state machine 92s is in the data transfer ready state 152. This suspend request primitive causes the state machine 92s to transition into the local suspend state 156. The suspend request primitive includes a parameter N 156n, indicating how many new PDUs 100 in the transmitting buffer 92t may be transmitted before transmission along the channel 88 must be stopped until explicitly resumed by a resume primitive from the layer 3 interface 93. The state machine 92s uses the parameter N 156n to generate a suspend point 110. While in the local suspend state 156, the state machine 92s will transmit no PDUs 100 along the channel 88 that have SNs 43 that exceed the suspend point 110. Inparticular, the suspend point 110 is the value of N 156n added to VT(S) 92v at the time the suspend primitive was received by the state machine 92s. The suspend point 110 has an SN 100v with an associated HFN 110f. The HFN 110f is equal to the tHFN 95t of VT(S) 92v, or is one greater than the tHFN 95t of VT(S) 92v if rollover occurred while adding N 156n to VT(S) 92v to generate the SN 110v. In short, the suspend point 110 is an HFN 110f/SN 110v pair generated by adding with carry N 156n to VT(S) 92v, utilizing the corresponding tHFN 95t as the high-order bits for carry.

In the interleaved local suspend and reset method of the present invention, the layer 2 interface 92 determines that the channel 88 must be reset while the state machine 92s is in the local suspend state 156. That is, prior to receiving a resume primitive from the layer 3 interface 93 to terminate the local suspend state 156, the state machine 92s initiates a reset procedure for its corresponding channel 88. This may occur because the layer 2 interface 92 detects protocol errors along the channel 88, or is in response to a re-establish primitive issued by the layer 3 interface 93 to the state machine 92s. If the reset procedure is not in response to a re-establish primitive from the layer 3 interface 93, then the state machine 92s transmits a reset control PDU 100r (item 60 of Fig.5) down the channel 88, and then transitions from the local suspend state 156 into the reset pending state 154. The reset control PDU 100r is transmitted regardless of the suspend point 110, as the reset control PDU 100r is a required element of such a reset procedure for the channel 88. While in the reset pending state 154, the state machine 92s transmits no layer 2 data 100d along the channel 88, and waits for a reset acknowledgment PDU 101a (item 70 of Fig.6) from the second device 200. Upon reception of the reset acknowledgment PDU 101a, the state machine 92s transitions from the reset pending state 154 back into the local suspend state 156, and executes the reset code 92e. In the event that the reset procedure is in response to a re-establish primitive from the layer 3 interface 93, the state machine 92s simply executes the reset code 92e, but remains in the local suspend state 156. In either event, the reset code 92e is executed by the state machine 92s, which is the common and key feature of any reset procedure for the present invention.

In the first embodiment of the present invention, the HFN 110f of the suspend point 110 is ignored after the reset procedure. In this first embodiment, the reset code 92e, in response to the transition from the reset pending state 154 back to the local suspend state 156, or in response to the re-establish primitive from the layer 3 interface 93, clears the buffers 92t and 92r, and places the state variables 92x into default conditions. In particular, VT(S) 92v is set to a default value of zero, the rHFN 95r is set to one greater than the value of the HFN (item 76 in Fig.6) in the reset acknowledgment PDU 101a, the tHFN 95t is incremented by one, and the SN 110v of the suspend point 110 is set to a default value of zero. Since, after the reset procedure, the state machine 92s ignores the value of the HFN 110f in the suspend point 110, the suspend point 110 is effectively set equal to the current value of VT(S) 92v. With the suspend point 110 equal, then, to VT(S) 92v, the state machine 92s can transmit no layer 2 data 100d along the channel 88 while in the local suspend state 156. Communications along the channel 88 is effectively halted until the layer 3 interface 93 issues a resume primitive to send the state machine 92s back to the data transfer ready state 152. As discussed earlier, the old ciphering configuration is used for those PDUs 100 that have SN values 43 that are before the suspend point 110. The new ciphering configuration is used for those PDUs 100 that have SN values 43 that are after the suspend point 110. Consequently, the effect on the state machine 92s of the reset procedure while in the local suspend state 156 is to force an immediate use of the new ciphering configuration for all PDUs 100 after the reset procedure. This can only occur after the ciphering reconfiguration and synchronization process is complete, the completion of which is signaled with the resume primitive from the layer 3 interface 93.

For the first embodiment of the present invention, perhaps the simplest way to force the state machine 92s to "ignore" the HFN 110f of the suspend point 110 after the reset procedure is to have the reset code 92e set the HFN 110f equal to the tHFN 95t. The HFN 110f of the SN 110v of the suspend point 110 would thus be the same as the HFN 95t of VT(S) 92v, leading to greater internal consistency.

In the second, and preferred, embodiment of the present invention, the HFN 110f of the suspend point 110 is not ignored after the reset procedure. To illustrate this, consider the following example. When VT(S) 92v is equal to 4000, with an associated tHFN value 95t of 50, the state machine 92s receives a suspend request primitive from the layer 3 interface 93 to initiate local suspend functionality for the channel 88. The suspend primitive has a value of 196 for the parameter N 156n. In response to the suspend primitive, the state machine 92s transitions from the data transfer ready state 152 to the local suspend state 156, and sets the suspend point 110 accordingly. That is, SN 110v is set to 4000+196=100 (due to rollover of the 12-bit sequence number). Since there was rollover of the SN 110v, the HFN 110f is set to one greater than the tHFN 95t, i.e., 50+1=51. The suspend point 110 thus has an HFN/SN pair value of 51/100.After a certain amount of time, a reset procedure is initiated by the layer 2 interface 92, the layer 2 interface 202 on the second device 200, or in response to a re-establish primitive from the layer 3 interface 93. In any case, the reset procedure culminates with the state machine 92s executing the reset code 92e. In this second embodiment, the reset code 92e will not affect the suspend point 110, but it will set VT(S) 92v to zero, and change both the tHFN 95t and the rHFN 95r as per synchronization requirements discussed earlier. If, at the time the reset procedure is initiated, VT (S) -1 is between zero and 99, then the tHFN 95t would have incremented to a value of 51. The reset procedure in this case would yield a value of 52 for the tHFN 95t, resulting in an HFN/SN pair of 52/0 associated with VT(S) 92v after the reset procedure. The tHFN 95t/VT(S) 92v pair thus exceeds the suspend point 110 (having an HFN/SN pair value of 51/100), and so the state machine 92s will transmit no layer 2 PDU data 100d along the channel 88 while in the local suspend state after the reset procedure, for this case. However, if the reset procedure occurs while VT(S)-1 is between 4000 and 4095, then the tHFN 95t at this time would still be 50, and hence would be incremented to 51 after the reset procedure. In this case, the HFN/SN pair associated with VT(S) 92v would be 51/0, which is less than the suspend point 110 HFN/SN pair of 51/100. Consequently, PDUs 100 with SN values 43 from 0 to 99 may be transmitted along the channel 88 by the state machine 92s while in the local suspend state 156 after the reset procedure, using the old ciphering configuration. The new ciphering configuration would be applied after the suspend point 110, after the resume primitive from the layer 3 interface 93 had terminated the local suspend function and caused the state machine 92s to transition back to the data transfer ready state 152. It is believed that the preferred embodiment of the present invention should have an easier software implementation, as the suspend function and the reset function may work independently of each other. That is, in the preferred embodiment, the suspend function would not have to "remember" that a reset procedure occurred in order to be properly implemented. The design is thus more internally consistent.

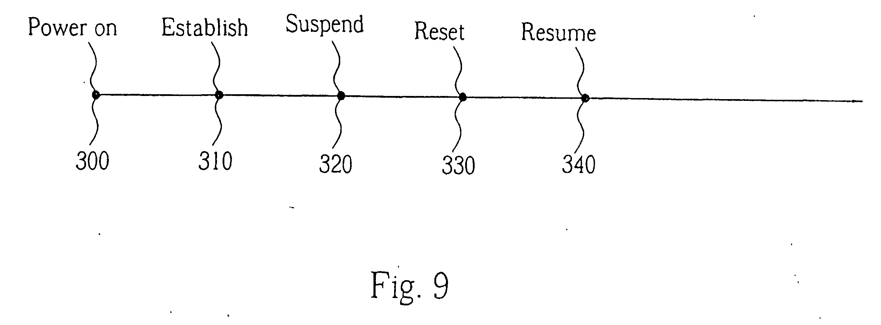

Please refer to Fig.9, with reference to Figs.7 and 8. Fig.9 illustrates a timeline of the present invention method. Time is assumed to increase along the direction of the arrow in Fig.9. Initially, the wireless communications device 80 is turned on at time 300. The state machine 92s is placed into the null state 150 and awaits an establish primitive from the layer 3 interface 93. At time 310, the layer 3 interface 93 sends an establish primitive to the state machine 92s, and in response to the establish primitive, the state machine 92s transitions into the data transfer ready state 152. In the data transfer ready state 152, the state machine 92s has established the corresponding channel 88, and is free to transmit layer 2 PDUs 100 in the transmitting buffer 92t along the channel 88. At time 320, the layer 3 interface 93 determines that the ciphering configuration needs to be changed. As a result of this, the layer 3 interface 93 sends a suspend request primitive to the state machine 92 to initiate a local suspend function for the channel 88. In response to the suspend primitive, the state machine 92s transitions into the local suspend state 156, and generates the suspend point 110 according to the local suspend parameter N 156n. Layer 2 PDUs having SN values 43 that exceed the suspend point 110 are not transmitted along the channel 88 while the state machine 92s is in the local suspend state 156. The suspend point 110 may have only an SN value 110v, or may have both the SN value 110v with an associated HFN value 110f. If only the SN value 110v is used, then a direct SN-to-SN comparison is performed with the layer 2 PDUs 100, using the SN 43 of a PDU 100 and the SN 110v, to determine if the PDU 100 exceeds the suspend point 100. Alternatively, if the HFN 110f is used, then the comparison is a more proper 32-bit comparison, using the HFN/SN pair from the HFN 110f and the SN 100v, and comparing this HFN/SN pair against that of the PDU 100, using the SN 43 of the PDU 100 and a tHFN 95t associated with the PDU 100 . At time 330, while the state machine 92s is still in the local suspend state 156, a reset procedure is initiated. The reset procedure may be initiated by the device 80, or by the device 200. If the reset procedure is initiated by the layer 2 interface 92 in the device 80, then the state machine 92s will transmit a reset control PDU 100r along the channel 88 to the second device 200, and then transition into the reset pending state 154 to await reception of a reset acknowledgment PDU 101a. Upon reception of the reset acknowledgment PDU 101a, the state machine 92s transitions back into the local suspend state 156 and executes the reset code 92e. If, however, the reset procedure is initiated by the second device 200, then, upon reception of a reset control PDU 101r from the device 200 along the channel 88, the state machine 92s transmits a reset acknowledgment PDU 100a along the channel 88 and then executes the reset code 92e. Finally, if the reset procedure is initiated by the layer 3 interface 93 of the device 80 by way of a re-establish primitive to the state machine 92s, then the state machine 92s simply executes the rest code 92e without transmitting any indicative layer 2 control PDUs 100a, 100r to the second device 200. Executing the reset code 92e marks the end of the reset procedure for the wireless communications device 80, and causes VT(S) 92v to be set to a default value of zero, and synchronizes the tHFN 95t and the rHFN 95r with the second device 200. The reset procedure 92e also clears the transmitting buffer 92t and the receiving buffer 92r. If the suspend point 110 has no HFN 110f, or if the HFN 110f is to be ignored, then the reset code 92e sets the SN value 110v of the suspend point 110 equal to the default value of VT(S) 92v, i.e., equal to zero, and may set the HFN 110f equal to the tHFN 95t. If the suspend point 110 includes an HFN 110f that is not ignored, then the reset code 92e does not change the suspend point 110. Up to time 340, the state machine 92s transmits no PDUs 100 that exceed the suspend point 110, performing the suspend point 110 comparison for transmitted layer 2 PDUs 100 as described previously. Also, up to time 340, the old ciphering configuration is used to encrypt the layer 2 PDUs 100. At time 340, the layer 3 interface 93 completes reconfiguration and synchronization of the ciphering engine 92c with the second device 200, and thus issues a resume primitive to the state machine 92s. In response to the resume primitive, the state machine 92s cancels the local suspend function and returns to the data transfer ready state 152. PDUs having SN values 43 that are equal to, or exceed, the suspend point 110 are encrypted using the new ciphering configuration and transmitted along the channel 88.

In contrast to the prior art, the present invention causes the suspend point to be modified if no associated HFN is used, so that a reset procedure results in an immediate suspension of the transmission of layer 2 PDUs while in the local suspend state. Alternatively, and in the preferred embodiment, the suspend point is required to utilize an HFN to determine which layer 2 PDUs may be transmitted and which may not while in the local suspend state.

Those skilled in the art will readily observe that numerous modifications and alterations of the device may be made while retaining the teachings of the invention. Accordingly, the above disclosure should be construed as limited only by the metes and bounds of the appended claims.

## Claims

1. An interleaved local suspend and reset method for a wireless communications system, the wireless communications system comprising a first station (80) in wireless communications with a second station (200) along at least one channel (88), the method comprising the steps of:
the first station (80) initiating a local suspend function for the channel (88) and a suspend point (110) is determined by a first sequence number, SN (110v);
prior to a resume command to terminate the local suspend function, initiating a reset procedure for the channel (88);
awaiting the resume command (340) for the channel (88) to terminate the local suspend function;
**characterized in that** it comprises the step of setting the first SN (110v) of the suspend point (110) equal to a default value in response to the reset procedure.

2. The method of claim 1, wherein setting the first SN (110v) of the suspend point (110) equal to the default value **characterized in that** the default value is zero and the setting causes the first station (80) to thereafter immediately halt transmission of layer 2 protocol data units PDUs (100), to the second station (200) along the channel (88) while the local suspend function for the channel (88) is active.

3. The method of claim 2, **characterized in that** the suspend point (110) comprises a hyper-frame number HFN (110f) associated with the SN (110v) of the suspend point (110), and in response to the reset procedure, the HFN (110f) is set equal to a transmitting HFN (95t) of the first station (80).

4. The method of claim 1, **characterized in that** a prior ciphering configuration for the channel (88) is used before the resume command and a new ciphering configuration is used for the channel (88) after the resume command.

5. An interleaved local suspend and reset method for a wireless communications system, the wireless communications system comprising a first station (80) in wireless communications with a second station (200) along at least one channel (88), the method comprising the steps of:
the first station (80) initiating a local suspend function for the channel (88) and determining a suspend point (110);
prior to a resume command to terminate the local suspend function, initiating a reset procedure for the channel (88); and
awaiting the resume command for the channel (88) to terminate the local suspend function;
**characterized in that** the suspend point (110) is determined by a first sequence number SN (110v) and a first hyper-frame number HFN (110f) to form a first HFN/SN pair and that after the reset procedure and prior to terminating the local suspend function, the first station (80) transmits along the channel (88) to the second station (200) no layer 2 protocol data units PDUs (100) having associated HFN/SN pairs that are sequentially after the first HFN/SN pair.

6. The method of claim 5, **characterized in that** a prior ciphering configuration for the channel (88) is used for layer 2 PDUs (100) with HFN/SN pairs sequentially before the first HFN/SN pair and a new ciphering configuration is used for the channel (88) for layer 2 PDUs (100) with HFN/SN pairs sequentially after the first HFN/SN pair.

7. The method of claim 5, **characterized in that** after the reset procedure (330), and prior to terminating the local suspend function (340), the first station (80) transmits along the channel (88) to the second station (200) layer 2 PDUs (100) having associated HFN/SN pairs that are sequentially before the first HFN/SN pair.

## Patentansprüche

1. Verfahren zum verschachtelten lokalen Aussetzen und Zurücksetzen für ein drahtloses Kommunikationssystem, wobei das drahtlose Kommunikationssystem eine erste Station (80) umfasst, die mit einer zweiten Station (200) längs wenigstens eines Kanals (88) drahtlos kommuniziert, wobei das Verfahren die folgenden Schritte umfasst:
die erste Station (80) initiiert eine lokale Aussetzfunktion für den Kanal (88) und ein Aussetzpunkt (110) wird durch eine erste Folgennummer SN (110v) bestimmt;
vor einem Wiederaufnahmebefehl, der die lokale Aussetzfunktion beendet, wird eine Rücksetzprozedur für den Kanal (88) initiiert;
auf den Wiederaufnahmebefehl (340) für den Kanal (88) wird gewartet, um die lokale Aussetzfunktion zu beenden;
**dadurch gekennzeichnet, dass** es den Schritt umfasst, bei dem die erste SN (110v) des Aussetzpunkts (110), die gleich einem im Voraus eingestellten Wert ist, in Reaktion auf die Rücksetzprozedur gesetzt wird.

2. Verfahren nach Anspruch 1, bei dem das Setzen der ersten SN (110v) des Aussetzpunkts (110), die gleich dem voreingestellten Wert ist, gesetzt wird, **dadurch gekennzeichnet, dass** der im Voraus festgelegte Wert null ist und das Setzen die erste Station (80) dazu veranlasst, sofort danach die Übertragung von Schicht-2-Protokolldateneinheiten, Schicht-2-PDUs, (100) längs des Kanals (88) an die zweite Station (200) anzuhalten, während die lokale Aussetzfunktion für den Kanal (88) aktiv ist.

3. Verfahren nach Anspruch 2, **dadurch gekennzeichnet, dass** der Aussetzpunkt (110) eine Hyperrahmen-Nummer HFN (110f), die der SN (110v) des Aussetzpunkts (110) zugeordnet ist, besitzt und dass in Reaktion auf die Rücksetzprozedur die HFN (110f) gleich einer Übertragungs-HFN (95t) der ersten Station (80) gesetzt wird.

4. Verfahren nach Anspruch 1, **dadurch gekennzeichnet, dass** eine frühere Verschlüsselungskonfiguration für den Kanal (88) vor dem Wiederaufnahmebefehl verwendet wird und eine neue Verschlüsselungskonfiguration für den Kanal (88) nach dem Wiederaufnahmebefehl verwendet wird.

5. Verfahren zum verschachtelten lokalen Aussetzen und Zurücksetzen für ein drahtloses Kommunikationssystem, wobei das drahtlose Kommunikationssystem eine erste Station (80) umfasst, die mit einer zweiten Station (200) längs wenigstens eines Kanals (88) drahtlos kommuniziert, wobei das Verfahren die folgenden Schritte umfasst:
die erste Station (80) initiiert eine lokale Aussetzfunktion für den Kanal (88) und bestimmt einen Aussetzpunkt (110);
vor einem Wiederaufnahmebefehl, der die lokale Aussetzfunktion beendet, wird eine Rücksetzprozedur für den Kanal (88) initiiert; und
auf den Wiederaufnahmebefehl für den Kanal (88) wird gewartet, um die lokale Aussetzfunktion zu beenden;
**dadurch gekennzeichnet, dass** der Aussetzpunkt (110) durch eine erste Folgennummer SN (110v) und eine erste Hyperrahmen-Nummer HFN (110f) bestimmt wird, um ein erstes HFN/SN-Paar zu bilden, und dass nach der Rücksetzprozedur und vor dem Beenden der lokalen Aussetzfunktion die erste Station (80) längs des Kanals (88) an die zweite Station (200) keine Schicht-2-Protokolldateneinheiten, Schicht-2-PDUs, (100), die zugeordnete HFN/SN-Paare besitzen, die sequentiell nach dem ersten HFN/SN-Paar liegen, sendet.

6. Verfahren nach Anspruch 5, **dadurch gekennzeichnet, dass** eine frühere Verschlüsselungskonfiguration für den Kanal (88) für Schicht-2-PDUs (100) mit HFN/SN-Paaren, die sequentiell vor dem ersten HFN/SN-Paar liegen, verwendet wird und eine neue Verschlüsselungskonfiguration für den Kanal (88) für Schicht-2-PDUs (100) mit HFN/SN-Paaren, die sequentiell nach dem ersten HFN/SN-Paar liegen, verwendet wird.

7. Verfahren nach Anspruch 5, **dadurch gekennzeichnet, dass** nach der Rücksetzprozedur (330) und vor der Beendigung der lokalen Aussetzfunktion (340) die erste Station (80) längs des Kanals (88) an die zweite Station (200) Schicht-2-PDUs (100), die zugeordnete HFN/SN-Paare besitzen, die sequentiell vor dem ersten HFN/SN-Paar liegen, sendet.

## Revendications

1. Un procédé de mise en veille et de réinitialisation locales entrelacées pour un système de communications sans fil, le système de communications sans fil comprenant une première station (80), en communication sans fil avec une deuxième station (200), sur au moins un canal (88), le procédé comprenant les étapes consistant :
- à ce que la première station (80) amorce une fonction de mise en veille locale pour le canal (88), et à ce qu'un point de mise en veille (110) soit déterminé par un premier numéro d'ordre SN *(sequence number)* (110v) ;
- préalablement à une commande de reprise pour mettre fin à la fonction de mise en veille locale, à amorcer une procédure de réinitialisation pour le canal (88) ;
- à attendre la commande de reprise (340) pour le canal (88) pour mettre fin à la fonction de mise en veille locale ;
**caractérisé en ce qu'**il comprend l'étape de définition du premier numéro d'ordre SN (110v) du point de mise en veille (110), pour qu'il soit égal à une valeur par défaut, en réponse à la procédure de réinitialisation.

2. Le procédé selon la revendication 1, dans lequel la définition du premier numéro d'ordre SN (110v) du point de mise en veille (110) est égale à la valeur par défaut, **caractérisé en ce que** la valeur par défaut est zéro, et **en ce que** la définition amène la première station (80), immédiatement après cela, à arrêter la transmission d'unités de données de protocole (PDU) de niveau 2 (100) à la deuxième station (200), sur le canal (88), pendant que la fonction de mise en veille locale pour le canal (88) est active.

3. Le procédé selon la revendication 2, **caractérisé en ce que** le point de mise en veille (110) comprend un numéro d'hypertrame HFN (110f), associé au SN (110v) du point de mise en veille (110) et, en réponse à la procédure de réinitialisation, le HFN (110f) est défini pour être égal à un HFN émetteur (95t) de la première station (80).

4. Le procédé selon la revendication 1, **caractérisé en ce qu'**une configuration de chiffrement antérieure pour le canal (88) est utilisée avant la commande de reprise, et **en ce qu'**une nouvelle configuration de chiffrement est utilisée pour le canal (88) après la commande de reprise.

5. Un procédé de mise en veille et de réinitialisation locales entrelacées, pour un système de communications sans fil, le système de communications sans fil comprenant une première station (80) en communication sans fil avec une deuxième station (200), sur au moins un canal (80), le procédé comprenant les étapes consistant:
- à ce que la première station (80) amorce une fonction de mise en veille locale pour le canal (88), et détermine un point de mise en veille (110) ;
- préalablement à l'interruption de la fonction de mise en veille locale par une commande de reprise, à amorcer une procédure de réinitialisation pour le canal (88) ; et
- à attendre la commande de reprise pour le canal (88) pour mettre fin à la fonction de mise en veille locale ;
**caractérisé en ce que** le point de mise en veille (110) est déterminé par un premier numéro de séquence SN (110v) et un premier numéro d'hypertrame HFN (110f), pour former une première paire HFN/SN, et **en ce que**, après la procédure de réinitialisation et préalablement à l'interruption de la fonction de mise en veille locale, la première station (80) ne transmet, sur le canal (88), à la deuxième station (200) aucune unité de données de protocole (PDU) (100) de niveau 2 ayant des paires HFN/SN associées qui sont séquentiellement après la première paire HFN/SN.

6. Le procédé selon la revendication 5, **caractérisé en ce qu'**une configuration de chiffrement antérieure pour le canal (88) est utilisée pour des PDU (100) de niveau 2, avec des paires HFN/SN séquentiellement avant la première paire HFN/SN, et **en ce qu'**une nouvelle configuration de chiffrement est utilisée pour le canal (88) pour des PDU (100) de niveau 2, avec des paires HFN/SN séquentiellement après la première paire HFN/SN.

7. Le procédé selon la revendication 5, **caractérisé en ce que**, après la procédure de réinitialisation (330) et, préalablement à l'interruption de la fonction de mise en veille locale (340), la première station (80) émet, sur le canal (88), à la deuxième station (200), des PDU (100) de niveau 2 ayant des paires HFN/SN associées qui sont séquentiellement avant la première paire HFN/SN.
